# EUROPÄISCHE PATENTANMELDUNG

(11) **EP 4 312 127 A1**
(43) Veröffentlichungstag der Anmeldung: **31.01.2024**
(21) Anmeldenummer: 23184502.5
(22) Anmeldetag: 10.07.2023
(51) Int. Cl.: G06F 11/36, G05B 17/00, G06N 3/08

(54) **VORRICHTUNG UND VERFAHREN ZUR PRÜFUNG EINER KI-BASIERTEN SICHERHEITSFUNKTION EINES STEUERUNGSSYSTEMS EINES FAHRZEUGS**

(30) Priorität: 26.07.2022 DE 102022207655
(71) Anmelder: Siemens Mobility GmbH, 81739 München (DE)
(72) Erfinder: Schmid, Reiner, 80538 München (DE)
(74) Vertreter: Siemens Patent Attorneys

(57) **Zusammenfassung**

Die Erfindung betrifft eine Vorrichtung (100) zur Prüfung einer Sicherheitsfunktion eines Steuerungssystems eines Fahrzeugs, wobei die Sicherheitsfunktion (202) auf Basis einer künstlichen Intelligenz (KI) eingerichtet und zur Objekterkennung eines Objekts in einer Umgebung des Fahrzeugs in Abhängigkeit von Umgebungsdaten des Fahrzeugs geeignet ist. Die Vorrichtung (100) umfasst:
- eine Schnittstelle (101), die derart eingerichtet ist, mittels Sensoren des Fahrzeugs erfasste Umgebungsdaten (D1) des Fahrzeugs einzulesen,
- einen Testdatengenerator (102), der derart eingerichtet ist, in Abhängigkeit der Umgebungsdaten (D1) Testeingabedaten (D2) für eine Kopie der Sicherheitsfunktion (103) zu generieren,
- die Kopie der Sicherheitsfunktion (103), die funktionsgleich zur Sicherheitsfunktion (202) des Fahrzeugs ist,
- eine Analyseeinheit (104), die derart eingerichtet ist, die Testeingabedaten (D2) der Kopie der Sicherheitsfunktion des Steuerungssystems bereitzustellen und die Kopie der Sicherheitsfunktion (103) in Abhängigkeit der Testeingabedaten (D2) zum Generieren von Testausgabedaten (D3) auszuführen,
und
- eine Prüfeinheit (105), die derart eingerichtet ist, die Testausgabedaten (D3) der Kopie der Sicherheitsfunktion anhand eines vorgegebenen Prüfkriteriums zu prüfen und ein entsprechendes Prüfergebnis (PE) auszugeben.

## Beschreibung

Die Erfindung betrifft eine Vorrichtung und ein computerimplementiertes Verfahren zur Prüfung einer Sicherheitsfunktion eines Steuerungssystems eines Fahrzeugs, wobei die Sicherheitsfunktion auf Basis einer künstlichen Intelligenz eingerichtet und zur Objekterkennung eines Objekts in einer Umgebung des Fahrzeugs in Abhängigkeit von Umgebungsdaten des Fahrzeugs geeignet ist, sowie ein Computerprogrammprodukt.

Mit zunehmender Komplexität der Anforderungen an Hinderniserkennungssysteme, beispielsweise in der Zugtechnik oder beim autonomen Fahren, kommen Methoden der künstlichen Intelligenz (KI) zum Einsatz, die es ermöglichen sollen komplexe Situation richtig zu erkennen und zu analysieren. Dabei sollte jederzeit beurteilt werden können, ob KI-basierten Funktionen die Situation sicher erkennen und analysieren. Dafür müsste allerdings die KI-basierte Funktion auf einem Datensatz trainiert worden sein, der hinreichend viele mögliche Situationen abdeckt.

Aus der traditionellen funktionalen Sicherheitstechnik sind Architekturen bekannt, die darauf beruhen, dass während eines Betriebes beständig Testdaten an das System gesendet werden, um zu überwachen, dass dieses noch gemäß der Spezifikation arbeitet. Damit wird eine beständige Prüfung der Sicherheitsfunktion durchgeführt, die ausreicht, um auch die Erfüllung der Sicherheitsanforderungen höherer Safety Integrity Levels (SIL) hinreichend belegen zu können. Bei den bekannten Safety-Monitoring-Funktionen werden Testinputs für die Sicherheitsfunktion generiert und dann geprüft, ob diese eine erwartete Reaktion der Funktion auslöst. Dies erfolgt im Regelfall in einem Testmodus der Safetyfunktion, so dass der Testinput keine reale Reaktion des Systems auslöst, sondern nur die Ausgabe der Funktion überwacht wird, ob sie den erwarteten Ergebnissen entspricht.

Ein solches Vorgehen ist aber nicht einfach auf eine KI-basierte Sicherheitsfunktion übertragbar, da kein einfacher universell verwendbarer Inputdatensatz zum Testen der KI-basierten Sicherheitsfunktion angeben werden kann, bei dessen Aktivierung sichergestellt ist, dass die KI-basierte Sicherheitsfunktion unabhängig von der konkreten Einsatzsituation ausreichend geprüft wird, um Fehlfunktionen auszuschließen.

Es ist daher eine Aufgabe der Erfindung, eine Prüfung einer KI-basierten Sicherheitsfunktion hinsichtlich Sicherheitsanforderungen zu ermöglichen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zur Prüfung einer Sicherheitsfunktion eines Steuerungssystems eines Fahrzeugs,
wobei die Sicherheitsfunktion auf Basis einer künstlichen Intelligenz eingerichtet und zur Objekterkennung eines Objekts in einer Umgebung des Fahrzeugs in Abhängigkeit von Umgebungsdaten des Fahrzeugs geeignet ist,
wobei die Vorrichtung umfasst:
   - eine Schnittstelle, die derart eingerichtet ist, mittels Sensoren des Fahrzeugs erfasste Umgebungsdaten des Fahrzeugs einzulesen,
   - einen Testdatengenerator, der derart eingerichtet ist, in Abhängigkeit der Umgebungsdaten Testeingabedaten für eine Kopie der Sicherheitsfunktion zu generieren,
   - die Kopie der Sicherheitsfunktion, die funktionsgleich zur Sicherheitsfunktion des Fahrzeugs ist,
   - eine Analyseeinheit, die derart eingerichtet ist, die Testeingabedaten der Kopie der Sicherheitsfunktion des Steuerungssystems bereitzustellen und die Kopie der Sicherheitsfunktion in Abhängigkeit der Testeingabedaten zum Generieren von Testausgabedaten auszuführen,
      und
   - eine Prüfeinheit, die derart eingerichtet ist, die Testausgabedaten der Kopie der Sicherheitsfunktion anhand eines vorgegebenen Prüfkriteriums zu prüfen und ein entsprechendes Prüfergebnis auszugeben.

Eine Sicherheitsfunktion auf Basis einer künstlichen Intelligenz bzw. eine KI-basierte Sicherheitsfunktion kann beispielsweise ein Bilderkennungssystem sein, das anhand von Eingabedaten, wie z.B. Kamerabildern, Objekte erkennt. Eine solche KI-basierte Sicherheitsfunktion ist vorzugsweise mittels eines Trainingsdatensatzes trainiert, Objekte anhand der Eingabedaten zu erkennen und beispielsweise ein Objektmodell und/oder eine Objektinformation auszugeben. Die KI-basierte Sicherheitsfunktion kann beispielsweise auf Basis eines künstlichen neuronalen Netzes eingerichtet sein.

Es ist ein Vorteil der vorliegenden Erfindung, dass eine KI-basierte Sicherheitsfunktion zur Objekterkennung während des Betriebs automatisiert geprüft werden kann. Dazu wird eine Kopie der Sicherheitsfunktion bereitgestellt. Außerdem kann ein Testinput zur Überprüfung der einwandfreien Funktion der Objekterkennung dynamisch auf Grundlage der jeweils aktuellen Verwendungssituation (Tageszeit, Wetter, Verkehrsverbindungen etc.) generiert werden. Damit wird beispielsweise erreicht, dass eine sinnvolle Aussage über die Verlässlichkeit der KI-basierten Sicherheitsfunktion in der aktuellen Verwendungssituation erreicht wird, insbesondere auch dann, wenn die KI-basierte Sicherheitsfunktion nicht notwendigerweise für diese Situation trainiert worden ist und daher eine genaue Abschätzung der Verlässlichkeit auf Basis der zur Erstellung verwendeten Daten nicht möglich ist. Safety-Monitoring wie für traditionelle sicherheitsrelevante Systeme auf Basis vordefinierter Testinputdaten ist für KI-basierte Sicherheitsfunktionen nicht ausreichend.

In einer Ausführungsform kann der Testdatengenerator derart eingerichtet sein, die Testeingabedaten abhängig von mindestens einer vorgegebenen Objektinformation eines Objekts zu generieren und die Prüfeinheit derart eingerichtet ist, zu prüfen, ob die Testausgabedaten der Kopie der Sicherheitsfunktion die Objektinformation unter Einhaltung eines vorgegebenen Schwellenwerts reproduzieren.

Damit können insbesondere Testeingabedaten generiert werden, die ein bestimmtes Objekt umfassen. Beispielsweise können derart Testbilder generiert werden, die ein vorgegebenes Verkehrshindernis zeigen. Mittels dieser Testeingabedaten kann geprüft werden, ob die Kopie der Sicherheitsfunktion das Objekt erkennt. Eine Objektinformation kann beispielsweise eine Objektklasse, eine Objektgröße und/oder eine Objektposition sein. So können beispielsweise Testbilder generiert werden, die ein vorgegebenes Objekt, wie z.B. einen Baum, umfassen.

In einer Ausführungsform kann die Schnittstelle eingerichtet sein, Einsatzbedingungen für die Sicherheitsfunktion einzulesen und der Testdatengenerator eingerichtet ist, die Testeingabedaten in Abhängigkeit der Einsatzbedingungen zu generieren.

Einsatzbedingungen für die Sicherheitsfunktion können beispielsweise Umgebungsbedingungen und/oder Wetterbedingungen für einen vorgegebenen und/oder üblichen Einsatz des Fahrzeugs sein.

In einer Ausführungsform kann der Testdatengenerator eingerichtet sein, die Testeingabedaten mittels eines Deep Learning Verfahrens zu generieren.

Beispielsweise kann Style Transfer oder eine Generative Bildgenerierung genutzt werden, um insbesondere hochqualitative an die aktuellen Umgebungsbedingungen angepasste Daten erzeugen zu können.

In einer Ausführungsform kann der Testdatengenerator eingerichtet sein, die Testeingabedaten anhand von parametrisierten Umgebungsdatensätzen auf Basis der eingelesenen Umgebungsdaten zu generieren.

Damit können insbesondere verschiedene Umgebungsbedingungen in den Testeingabedaten berücksichtigt werden. Ausgehend vom eingelesenen Sensordatensatz können so durch Variation von Parametern ein Umgebungsdatensatz erstellt werden.

In einer Ausführungsform kann die Vorrichtung zusätzlich eine Testdatenbewertungseinheit umfassen, die derart eingerichtet ist, eine Qualität der generierten Testeingabedaten zu bewerten und ein Qualitätsergebnis auszugeben, wobei bei der Bewertung geprüft wird, ob die generierten Testeingabedaten die Umgebungsdaten und/oder die Objektinformation hinreichend reproduzieren.

In einer Ausführungsform kann die Testdatenbewertungseinheit eingerichtet sein, eine Qualität der generierten Testeingabedaten zu bewerten und ein Qualitätsergebnis auszugeben, wobei bei der Bewertung geprüft wird, ob eine Varianz hinsichtlich der Testabdeckung der Testeingabedaten einen vorgegebenen Schwellwert einhält.

Damit kann eine zusätzliche Qualitätsprüfung der generierten Testeingabedaten realisiert werden.

In einer Ausführungsform kann die Vorrichtung weiter eine Steuereinheit des Testdatengenerators umfassen, die derart eingerichtet ist, in Abhängigkeit des Qualitätsergebnisses der generierten Testeingabedaten eine erneute Testdatengenerierung zu steuern.

Somit kann die Generierung der verwendeten Testinputs durch eine Rückkopplung kontrolliert und angepasst werden. Damit kann sichergestellt werden, dass für eine jeweilige Situation ein relevanter und aussagekräftiger Satz an Testinputs zur Verfügung steht.

In einer Ausführungsform die Vorrichtung weiter eine Freigabeeinheit umfassen, die derart eingerichtet ist, die Sicherheitsfunktion der Steuerungsfunktion des Fahrzeugs in Abhängigkeit des Prüfungsergebnisses freizugeben.

Gemäß einem zweiten Aspekt betrifft die Erfindung ein computerimplementiertes Verfahren zur Prüfung einer Sicherheitsfunktion eines Steuerungssystems eines Fahrzeugs, wobei die Sicherheitsfunktion auf Basis einer künstlichen Intelligenz eingerichtet und zur Objekterkennung eines Objekts in einer Umgebung des Fahrzeugs in Abhängigkeit von Umgebungsdaten des Fahrzeugs geeignet ist, mit den Verfahrensschritten:
- Einlesen von mittels Sensoren des Fahrzeugs erfassten Umgebungsdaten des Fahrzeugs,
- Generieren von Testeingabedaten für eine Kopie der Sicherheitsfunktion in Abhängigkeit der Umgebungsdaten, wobei die Kopie der Sicherheitsfunktion funktionsgleich zur Sicherheitsfunktion des Fahrzeugs ist,
- Bereitstellen der Testeingabedaten der Kopie der Sicherheitsfunktion des Steuerungssystems,
- Ausführen der Kopie der Sicherheitsfunktion in Abhängigkeit der Testeingabedaten zum Generieren von Testausgabedaten,
- Prüfen der Testausgabedaten der Kopie der Sicherheitsfunktion anhand eines vorgegebenen Prüfkriteriums,
   und
- Ausgeben eines Prüfergebnisses.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein Ausführungsbeispiel der Vorrichtung zur Prüfung einer Sicherheitsfunktion eines Steuerungssystems eines Fahrzeugs; und
- Fig. 2:: ein Ausführungsbeispiel des computerimplementierten Verfahrens zur Prüfung einer Sicherheitsfunktion eines Steuerungssystems eines Fahrzeugs.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

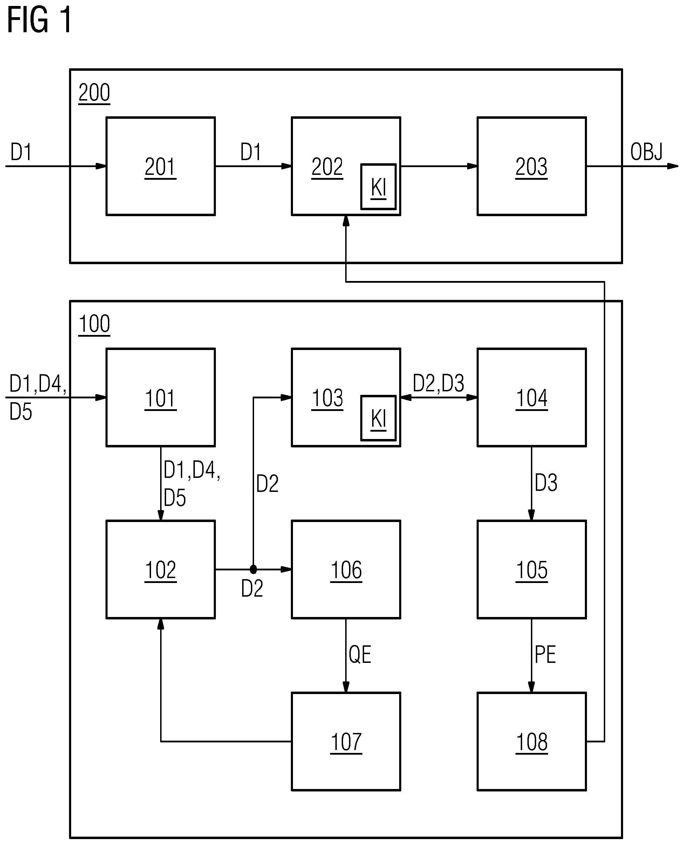

Figur 1 zeigt eine Vorrichtung zur Prüfung einer Sicherheitsfunktion 202 eines Objekterkennungssystems 200 eines Fahrzeugs, wobei die Sicherheitsfunktion 202 auf Basis einer künstlichen Intelligenz KI eingerichtet und zur Objekterkennung eines Objekts in einer Umgebung des Fahrzeugs in Abhängigkeit von Umgebungsdaten des Fahrzeugs geeignet ist. Ein Fahrzeug kann beispielsweise ein Schienenfahrzeug oder ein Kraftfahrzeug sein.

Das Objekterkennungssystem 200 umfasst mindestens einen Sensor 201, wie z.B. eine Kamera, die Sicherheitsfunktion 202 und ein Objektausgabemodul 203. Der Sensor 201 ist derart eingerichtet, Umgebungsdaten D1 des Fahrzeugs zu erfassen und an die Sicherheitsfunktion 202 zu übermitteln. Umgebungsdaten können beispielsweise Video- oder Bildaufnahmen einer unmittelbaren Umgebung des Fahrzeugs sein. Die Sicherheitsfunktion 202 ist KI-basiert und vorzugsweise darauf trainiert, anhand der Umgebungsdaten D1 mindestens ein Objekt, wie z.B. ein Verkehrshindernis, in der Umgebung des Fahrzeugs zu detektieren und ein Objektmodell OBJ und/oder eine Objektinformation OBJ auszugeben. Das Objektausgabemodul 203 ist eingerichtet, das Objektmodell OBJ und/oder die Objektinformation OBJ bereitzustellen.

Es kann sich beim Steuerungssystem 200 um ein Objekterkennungssystem für beispielsweise einen Zug oder ein autonomes Fahrzeug handeln. Es umfasst vorzugsweise ein Sensorsystem, das während des Betriebs Fahrzeugs, vorzugsweise kontinuierlich Daten über die Umgebung des Fahrzeuges erfasst. Das Sensorsystem kann unterschiedliche Sensoren umfassen: eine oder mehrere digitale Kameras im sichtbaren als auch Infrarotbereich, Radar, Lidar-Sensoren als auch beliebige andere Sensoren, die Informationen über den Umgebungsbereich des Fahrzeuges erfassen.

Die Sensordaten D1 werden dann nach einer eventuell erforderlichen Datenvorverarbeitung, die offensichtliche Störungen erkennt und in den Daten herausfiltert, an die KI-basierte Sicherheitsfunktion 202 weitergegeben, die eine Erkennung von Position, Größe und/oder Art der umgebenden Objekte anhand der Sensordaten D1 durchführt. Dazu ist die KI-basierte Sicherheitsfunktion 202 mittels Trainingsdaten darauf trainiert anhand der Sensordaten D1 Position, Größe und/oder Art eines Objekts zu erkennen.

Anhand der Ergebnisse der KI-basierten Sicherheitsfunktion 202 wird ein Objektmodell OBJ erstellt, das vorzugsweise alle in der Umgebung des Fahrzeuges befindlichen Objekte mit ihren Positionen, Größen und/oder identifizierten Klassen (z.B. Auto, LKW, Fahrrad, Baumstamm) verzeichnet. Anhand diese Objektmodells kann bestimmt werden, ob Objekte vorhanden sind, die bei Fahrentscheidungen berücksichtigt werden müssen und beispielsweise eine Bremsung oder den Verzicht auf das Anfahren eines stehenden Fahrzeuges erzwingen.

Ein solches Objekterkennungssystem 200 ist insbesondere für eine funktionale Sicherheit relevant, um beispielsweise einen Fahrzeugführer oder eine automatisierte Fahrzeugsteuerung zu unterstützen. So kann das Objektmodell OBJ beispielsweise als Input für eine Trajektorienplanung des Fahrzeugs dienen. Ebenso kann das Vorhandensein von Objekten in der Umgebung Aktionen erforderlich machen, die zur Wahrung der funktionalen Sicherheit erforderlich sind.

Die Vorrichtung 100 umfasst eine Schnittstelle 101, einen Testdatengenerator 102, eine Kopie der Sicherheitsfunktion 103, eine Analyseeinheit 104, und eine Prüfeinheit 105. Außerdem kann die Vorrichtung 100 eine Testdatenbewertungseinheit 106, eine Steuereinheit 107 des Testdatengenerators 102 und/oder eine Freigabeeinheit 108 umfassen. Die Vorrichtung 100 ist insbesondere zur Sicherheitsüberwachung/zum Safety-Monitoring der Sicherheitsfunktion 202 geeignet. Die Vorrichtung 100 kann vorzugsweise parallel zum Betrieb des Objekterkennungssystems 200 betrieben werden. Die Vorrichtung 100 umfasst vorzugsweise mindestens einen Prozessor.

Die Schnittstelle 101 ist derart eingerichtet, die Umgebungsdaten D1, Objektinformation D4, und/oder Einsatzbedingungen D5 einzulesen. Die Umgebungsdaten D1 werden von mindestens einem Sensor des Fahrzeugs bereitgestellt. Die Objektinformation D4 und/oder die Einsatzbedingungen D5 können beispielsweise von einer Speichereinheit eingelesen werden. Alternativ können die Einsatzbedingungen D5 auch aus den Umgebungsdaten D1 extrahiert werden.

Der Testdatengenerator 102 ist derart eingerichtet, in Abhängigkeit der Umgebungsdaten D1 Testeingabedaten D2 für die Kopie der Sicherheitsfunktion 103 zu generieren. Die Kopie der Sicherheitsfunktion 103 ist funktionsgleich zur Sicherheitsfunktion 202 des Fahrzeugs, d.h., ist ebenfalls auf Basis einer künstlichen Intelligenz KI eingerichtet und zur Objekterkennung eines Objekts in einer Umgebung des Fahrzeugs in Abhängigkeit von Umgebungsdaten des Fahrzeugs geeignet.

Außerdem kann der Testdatengenerator 102 Testeingabedaten D2 abhängig von mindestens einer vorgegebenen Objektinformation D4 eines Objekts generieren. Beispielsweise können derart Testeingabedaten D2 generiert werden, die ein vorgegebenes Verkehrshindernis zeigen.

Weiter kann der Testdatengenerator 102 eingerichtet sein, die Testeingabedaten D2 in Abhängigkeit der Einsatzbedingungen D5 zu generieren. Die Einsatzbedingungen D5 geben beispielsweise Helligkeit, Wetterbedingungen und/oder Komplexität der Umgebungsbedingungen für einen Einsatz des Fahrzeugs an. Bei der Testdatengenerierung werden diese Parameter berücksichtigt, um die generierten Testdaten D2 entsprechend der aktuellen Parametersituation einzustellen. Dazu können die Einsatzbedingungen D5 beispielsweise aus dem Datenstrom der Sensordaten D1 extrahiert werden.

Für die Testdatengenerierung werden die Sensordaten synthetisiert. Die generierten Testszenarien, die durch Analyse and Manipulation der Eingangssensordaten D1 entstehen, können insbesondere aussagekräftige Testszenarien für die aktuelle Verwendungssituation generiert werden.

Die Testeingabedaten D2 können insbesondere mittels eines Deep Learning Verfahrens generiert werden. Dabei werden beispielsweise Charakteristiken der Beispiele von Situationen auf Basis der vorliegenden Originaldaten D1 der Sensoren auf die aktuell vorliegende Situation transferiert.

Zusätzlich oder alternativ können die Testeingabedaten D2 anhand von parametrisierten Umgebungsdatensätzen auf Basis der eingelesenen Umgebungsdaten D1 generiert werden. So wird eine Erzeugung von parametrisierten Sätzen von Sensordaten auf Grundlage des Datenstrom des Sensorinputs erzielt, die einen bestimmten Bereich von Umweltbedingungen (Helligkeit, Sicht, etc.) abdecken.

Die so erzeugten Testinputs werden dann in einer zusätzlichen Instanz der Sicherheitsfunktion 103 ausgewertet, die zu der Sicherheitsfunktion 202 im Objekterkennungssystem 200 verwendeten, funktionsgleich ist. Damit ist sichergestellt, dass die erhalten Prüfungsergebnisse gültige Aussagen über das Objekterkennungssystem 200 zulassen.

Die Analyseeinheit 104 ist eingerichtet die Testeingabedaten D2 der Kopie der Sicherheitsfunkton 103 bereitzustellen und die Kopie der Sicherheitsfunktion 103 in Abhängigkeit der Testeingabedaten D2 zum Generieren von Testausgabedaten D3 auszuführen. Beim Ausführen der Kopie der Sicherheitsfunktion 103 in Abhängigkeit der Testeingabedaten D2 werden Testausgabedaten D3 generiert. Die Testausgabedaten D3 umfassen beispielsweise eine Objektinformation über ein detektiertes Objekt oder ein Objektmodell. Beispielsweise können Testeingabedaten D2 genutzt werden, die unter Berücksichtigung einer vorgegebenen Objektinformation D4 generiert wurden. Die Kopie der Sicherheitsfunktion 103 gibt dann Testausgabedaten aus, die vorzugsweise die Objektinformation umfassen. Derart kann die Funktionalität der Sicherheitsfunktion getestet werden.

Die Prüfeinheit 105 ist derart eingerichtet, die Testausgabedaten D3 anhand eines vorgegebenen Prüfkriteriums zu prüfen und ein entsprechendes Prüfergebnis PE auszugeben. Ein Prüfkriterium kann beispielsweise einen Schwellwert umfassen, der eine maximale/minimale Abweichung der Testausgabedaten von erwarteten Testausgabedaten angibt. Außerdem kann ein Prüfkriterium eine Detektionswahrscheinlichkeit umfassen, die angibt, wie sicher die Sicherheitsfunktion ein Objekt erkennen muss.

Außerdem kann die Prüfeinheit 105 derart eingerichtet sein, zu prüfen, ob die Testausgabedaten D3 der Kopie der Sicherheitsfunktion 103 die Objektinformation D4 unter Einhaltung eines vorgegebenen Schwellenwerts reproduzieren.

Die Resultate der Kopie der Sicherheitsfunktion 103 für die Testszenarien als auch die Resultate der Sicherheitsfunktion 202 im Objekterkennungssystem 200 können der Prüfeinheit 105 (Safety-Monitor) bereitgestellt werden, die bewertet, ob anhand der Testresultate von einem gültigen Resultat der primären Sicherheitsfunktion 202 ausgegangen werden kann, oder ob eine Safety-Verletzung vorliegt, die zur weiteren Verarbeitung dem nutzenden Steuerungssystem bekannt gemacht wird.

Die Testdatenbewertungseinheit 106 ist eingerichtet, eine Qualität der generierten Testeingabedaten D2 zu bewerten und ein Qualitätsergebnis QE auszugeben, wobei bei der Bewertung geprüft wird, ob die generierten Testeingabedaten D2 die Umgebungsdaten D1 und/oder die Objektinformation D4 hinreichend reproduzieren. Alternativ oder zusätzlich kann bei der Bewertung geprüft werden, ob eine Varianz hinsichtlich der Testabdeckung der Testeingabedaten einen vorgegebenen Schwellwert einhält.

Die Steuereinheit 107 des Testdatengenerators 102 ist eingerichtet, in Abhängigkeit des Qualitätsergebnisses QE der generierten Testeingabedaten D2 eine erneute Testdatengenerierung zu steuern. Beispielsweise kann bei einer unzureichenden Qualität der Testeingabedaten eine erneute Testdatengenerierung getriggert werden. Alternativ können bei einer unzureichenden Varianz der Testeingabedaten D2 weitere Testeingabedaten generiert werden.

Beispielsweise kann auf Basis der Testausgabedaten D3 der Kopie der Sicherheitsfunktion 103 eine Evaluierung der Qualität der Testeingabedaten D2 durchgeführt werden. Dazu werden die synthetisch generierten Testeingabedaten D2 beispielsweise mit den Zielgrößen der Umweltbedingungen D5 abgeglichen. Auf diese Weise wird geprüft, ob die Testszenarien die aktuellen Einsatzbedingungen D5 wiedergeben. Außerdem können die Testeingabedaten D2 anhand einer Performance der Kopie der Sicherheitsfunktion bzgl. der Testeingabedaten anhand von Metriken beurteilt werden. Diese Metriken dienen beispielsweise zur Beurteilung der Aussagefähigkeit der Test-Szenarien, indem Testabdeckung (Breite der generierten Test-szenarien) und Performance bestimmt werden. Werden beispielsweise vorgegebene Mindestbedingungen nicht erfüllt und ist daher die Aussagefähigkeit bzgl. der Sicherheit eingeschränkt, wird eine Anpassung der Testdatengenerierung erforderlich. Können auch nach einer Anpassung keine hinreichend aussagefähigen Test-Szenarien generiert werden, wird ebenfalls eine Sicherheitsverletzung angezeigt.

Die Testdatengenerierung wird durch eine Änderung des genutzten Datensatzes D1 für die Erzeugung der Testdaten angepasst. Die geschieht durch ein Feedbacksignal an den Testdatengenerator 102 durch die Steuereinheit 107, so dass die Testdatengenerierung an die jeweils aktuelle Einsatzsituation angepasst wird.

Die Freigabeeinheit 108 ist dazu eingerichtet, die Sicherheitsfunktion 202 der Steuerungsfunktion des Fahrzeugs in Abhängigkeit des Prüfungsergebnisses PE freizugeben.

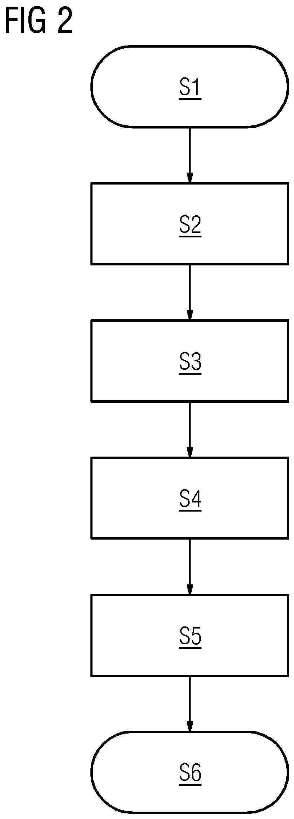

Figur 2 zeigt ein Ausführungsbeispiel eines computerimplementierten Verfahrens zur Prüfung einer Sicherheitsfunktion eines Steuerungssystems eines Fahrzeugs, wobei die Sicherheitsfunktion auf Basis einer künstlichen Intelligenz eingerichtet und zur Objekterkennung eines Objekts in einer Umgebung des Fahrzeugs in Abhängigkeit von Umgebungsdaten des Fahrzeugs geeignet ist, mit den Verfahrensschritten:
- Einlesen S1 von Umgebungsdaten des Fahrzeugs, die mittels Sensoren des Fahrzeugs erfassten wurden,
- Generieren S2 von Testeingabedaten für eine Kopie der Sicherheitsfunktion in Abhängigkeit der Umgebungsdaten, wobei die Kopie der Sicherheitsfunktion funktionsgleich zur Sicherheitsfunktion des Fahrzeugs ist,
- Bereitstellen S3 der Testeingabedaten der Kopie der Sicherheitsfunktion des Steuerungssystems,
- Ausführen S4 der Kopie der Sicherheitsfunktion in Abhängigkeit der Testeingabedaten zum Generieren von Testausgabedaten,
- Prüfen S5 der Testausgabedaten der Kopie der Sicherheitsfunktion anhand eines vorgegebenen Prüfkriteriums,
   und
- Ausgeben S6 eines Prüfergebnisses.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zur Prüfung einer Sicherheitsfunktion eines Steuerungssystems eines Fahrzeugs,
wobei die Sicherheitsfunktion (202) auf Basis einer künstlichen Intelligenz (KI) eingerichtet und zur Objekterkennung eines Objekts in einer Umgebung des Fahrzeugs in Abhängigkeit von Umgebungsdaten des Fahrzeugs geeignet ist,
wobei die Vorrichtung (100) umfasst:
- eine Schnittstelle (101), die derart eingerichtet ist, mittels Sensoren des Fahrzeugs erfasste Umgebungsdaten (D1) des Fahrzeugs einzulesen,
- einen Testdatengenerator (102), der derart eingerichtet ist, in Abhängigkeit der Umgebungsdaten (D1) Testeingabedaten (D2) für eine Kopie der Sicherheitsfunktion (103) zu generieren,
- die Kopie der Sicherheitsfunktion (103), die funktionsgleich zur Sicherheitsfunktion (202) des Fahrzeugs ist,
- eine Analyseeinheit (104), die derart eingerichtet ist, die Testeingabedaten (D2) der Kopie der Sicherheitsfunktion des Steuerungssystems bereitzustellen und die Kopie der Sicherheitsfunktion (103) in Abhängigkeit der Testeingabedaten (D2) zum Generieren von Testausgabedaten (D3) auszuführen,
und
- eine Prüfeinheit (105), die derart eingerichtet ist, die Testausgabedaten (D3) der Kopie der Sicherheitsfunktion anhand eines vorgegebenen Prüfkriteriums zu prüfen und ein entsprechendes Prüfergebnis (PE) auszugeben.

2. Vorrichtung (100) nach Anspruch 1, wobei der Testdatengenerator (102) derart eingerichtet ist, die Testeingabedaten (D2) abhängig von mindestens einer vorgegebenen Objektinformation (D4) eines Objekts zu generieren und die Prüfeinheit (105) derart eingerichtet ist, zu prüfen, ob die Testausgabedaten (D3) der Kopie der Sicherheitsfunktion die Objektinformation (D4) unter Einhaltung eines vorgegebenen Schwellenwerts reproduzieren.

3. Vorrichtung (100) nach einem der vorhergehenden Ansprüche, wobei die Schnittstelle (101) eingerichtet ist, Einsatzbedingungen (D5) für die Sicherheitsfunktion einzulesen und der Testdatengenerator (102) eingerichtet ist, die Testeingabedaten (D2) in Abhängigkeit der Einsatzbedingungen (D5) zu generieren.

4. Vorrichtung (100) nach einem der vorhergehenden Ansprüche, wobei der Testdatengenerator (102) eingerichtet ist, die Testeingabedaten (D2) mittels eines Deep Learning Verfahrens zu generieren.

5. Vorrichtung (100) nach einem der vorhergehenden Ansprüche, wobei der Testdatengenerator (102) eingerichtet ist, die Testeingabedaten (D2) anhand von parametrisierten Umgebungsdatensätzen auf Basis der eingelesenen Umgebungsdaten (D1) zu generieren.

6. Vorrichtung (100) nach einem der vorhergehenden Ansprüche weiter umfassend eine Testdatenbewertungseinheit (106), die derart eingerichtet ist, eine Qualität der generierten Testeingabedaten (D2) zu bewerten und ein Qualitätsergebnis (QE) auszugeben, wobei bei der Bewertung geprüft wird, ob die generierten Testeingabedaten (D2) die Umgebungsdaten (D1) und/oder die Objektinformation (D4) hinreichend reproduzieren.

7. Vorrichtung (100) nach einem der vorhergehenden Ansprüche, wobei die Testdatenbewertungseinheit (106) eingerichtet ist, eine Qualität der generierten Testeingabedaten (D2) zu bewerten und ein Qualitätsergebnis (QE) auszugeben, wobei bei der Bewertung geprüft wird, ob eine Varianz hinsichtlich der Testabdeckung der Testeingabedaten einen vorgegebenen Schwellwert einhält.

8. Vorrichtung (100) nach einem der vorhergehenden Ansprüche, weiter umfassend eine Steuereinheit (107) des Testdatengenerators (102), die derart eingerichtet ist, in Abhängigkeit des Qualitätsergebnisses (QE) der generierten Testeingabedaten eine erneute Testdatengenerierung zu steuern.

9. Vorrichtung (100) nach einem der vorhergehenden Ansprüche, weiter umfassend eine Freigabeeinheit (108), die derart eingerichtet ist, die Sicherheitsfunktion (202) der Steuerungsfunktion des Fahrzeugs in Abhängigkeit des Prüfungsergebnisses (PE) freizugeben.

10. Computerimplementiertes Verfahren zur Prüfung einer Sicherheitsfunktion eines Steuerungssystems eines Fahrzeugs, wobei die Sicherheitsfunktion auf Basis einer künstlichen Intelligenz eingerichtet und zur Objekterkennung eines Objekts in einer Umgebung des Fahrzeugs in Abhängigkeit von Umgebungsdaten des Fahrzeugs geeignet ist, mit den Verfahrensschritten:
- Einlesen (S1) von mittels Sensoren des Fahrzeugs erfassten Umgebungsdaten des Fahrzeugs,
- Generieren (S2) von Testeingabedaten für eine Kopie der Sicherheitsfunktion in Abhängigkeit der Umgebungsdaten, wobei die Kopie der Sicherheitsfunktion funktionsgleich zur Sicherheitsfunktion des Fahrzeugs ist,
- Bereitstellen (S3) der Testeingabedaten der Kopie der Sicherheitsfunktion des Steuerungssystems,
- Ausführen (S4) der Kopie der Sicherheitsfunktion in Abhängigkeit der Testeingabedaten zum Generieren von Testausgabedaten,
- Prüfen (S5) der Testausgabedaten der Kopie der Sicherheitsfunktion anhand eines vorgegebenen Prüfkriteriums,
und
- Ausgeben (S6) eines Prüfergebnisses.

11. Computerprogrammprodukt, das direkt in einen programmierbaren Computer ladbar ist, umfassend Programmcodeteile, die dazu geeignet sind, die Schritte des Verfahrens nach Anspruch 10 durchzuführen.
